# EUROPEAN PATENT APPLICATION

(11) **EP 4 714 328 A1**
(43) Date of publication of application: **25.03.2026**
(21) Application number: 25179695.9
(22) Date of filing: 29.05.2025
(51) Int. Cl.: A47L 15/42, A47L 15/48

(54) **A DISHWASHER COMPRISING A HEAT PUMP**

(30) Priority: 19.09.2024 TR 2024012448
(71) Applicant: Arçelik Anonim Sirketi, 34445 Istanbul (TR)
(72) Inventor: KARTAL, EMRE, 34445 ISTANBUL (TR); AYDINTUG, CETIN, 34445 ISTANBUL (TR); SERT, ABDULLAH, 34445 ISTANBUL (TR); TAVSANCI, GOKAY, 34445 ISTANBUL (TR); BALIKCI, ILHAN, 34445 ISTANBUL (TR)

(57) **Abstract**

The present invention relates to a dishwasher (1) comprising a body (2); a washing tub (3) which is disposed in the body (2) and wherein the washing process is performed; a sump (4) which is disposed under the washing tub (3) and wherein the water is collected; at least one spraying member (5) which sprays water onto the kitchen items placed into the washing tub (3); a heat pump (9) which is disposed under the washing tub (3) and which has a first heat exchanger (6) enabling the water to be used in the washing step to be heated by drawing heat from the environment, a second heat exchanger (7) transferring the heat received from the first heat exchanger (6) to the washing water and a compressor (8) fluidly connected to the first heat exchanger (6) and the second heat exchanger (7) so as to realize the refrigerant cycle; and a drying duct (10) with one end opening to the outer environment and the other end to the washing tub (3) and which enables the air to be delivered into the washing tub (3) during the drying step.

## Description

The present invention relates to a dishwasher comprising a heat pump.

In the dishwashers, heat pumps are used for decreasing the energy consumption and improve the drying performance. In heat pump dishwashers, the heat pump is composed of the compressor, the condenser, the throttle valve and the evaporator. The components of the heat pump are connected via a pipe line and the heat pump operates by means of the cycle fluid in the line. The condenser is a tube bundle having a hot surface and enables the water to be heated by being positioned in the washing liquid of the dishwasher. The evaporator has a cold surface and is positioned so as to contact the ambient air. The evaporator absorbs heat from the environment and provides the heat transfer to the compressor and the condenser. In this type of heat pump systems, for heating the water, the compressor is operated such that the condenser is enabled to heat the water, and the evaporator is enabled to absorb heat from the environment to support the condenser which heats the water. The compressor pressurizes and sends the cycle fluid to the condenser. The cycle fluid passes through the condenser and reaches the evaporator. After the evaporator, the cycle fluid returns to the compressor. By sending the fluid received by the compressor to the condenser again, the cycle is completed. The water heated by the condenser is transmitted to the multiport valve. According to the algorithm-dependent position of the multiport valve, the water is transmitted to the relevant spray arm through a water line to be sprayed into the dishwasher. In the related discharge step, the water is discharged from the sump by means of the discharge pump. The condenser is disposed in a condenser chamber. The condenser chamber forms a surface which heats up. Thus, any kind of fluid can be heated. Moreover, space restrains may occur due to the space occupied by the heat pump disposed in a limited area under the dishwasher.

In the state of the art European Patent Document No. EP3082554, a dishwasher is disclosed, comprising a heat pump which enables the air and the water to be heated by means of two separate condensers.

The aim of the present invention is the realization of a dishwasher comprising a heat pump which enables the water to be heated for the washing process and the air to be heated for the drying process.

The dishwasher realized in order to attain the aim of the present invention, explicated in the first claim and the respective claims thereof, comprises a body; a washing tub which is disposed in the body and wherein the items to be washed are placed; a heat pump which is disposed between the washing tub and the body; and a drying duct which enables the outside air to be delivered into the washing tub during the drying step. The heat pump comprises a first heat exchanger which absorbs heat from the environment so as to enable the water used in the washing step to be heated; a second heat exchanger which transfers the heat received from the first heat exchanger to the washing tub; and a compressor which performs the refrigerant cycle between the first heat exchanger and the second heat exchanger.

The dishwasher of the present invention comprises the second heat exchanger disposed in the drying duct. By positioning the second heat exchanger in the drying duct, saving in space is provided. Moreover, by heating both the air and the water, the washing and drying performance is increased.

In an embodiment of the present invention, the dishwasher comprises a fan which is disposed on the drying duct, a first shutter which is disposed between the drying duct and the fan, and a second shutter which is disposed between the drying duct and the washing tub. The fan enables the outside air to be sucked in to be sent to the drying duct. The air taken from the outside environment during the drying step is sent into the washing tub, thus increasing the drying performance.

In an embodiment of the present invention, the dishwasher comprises at least one water duct with one end opening to the drying duct and the other end to the sump. During the drying step, the water filling into the drying duct to be passed over the second heat exchanger is delivered to the sump by means of the water ducts. The water delivered to the sump is used in the washing step.

In an embodiment of the present invention, the dishwasher comprises the first shutter and the second shutter which shift to the closed position as the water fills into the drying duct during the washing step and to the open position as the water in the drying duct is discharged during the drying step. The water is filled into the drying duct in order to heat the water to be used in the washing step by means of the heat pump and deliver the same to the sump. Upon filling into the drying duct, the water pushes the shutters and shifts the same to the closed position. When the water in the drying duct is delivered to the sump, the force of the water is removed and the shutters shift to the open position. Thus, the air can be delivered into the washing tub.

In an embodiment of the present invention, the dishwasher comprises the water duct which enables the water filling into the drying duct to be delivered to the sump when the first shutter and the second shutter are in the closed position such that the drying duct is emptied.

By means of the present invention, a dishwasher is realized, comprising a heat pump which enables both the air and the water to be heated by means of a second heat exchanger.

A dishwasher realized in order to attain the aim of the present invention is illustrated in the attached figures, where:

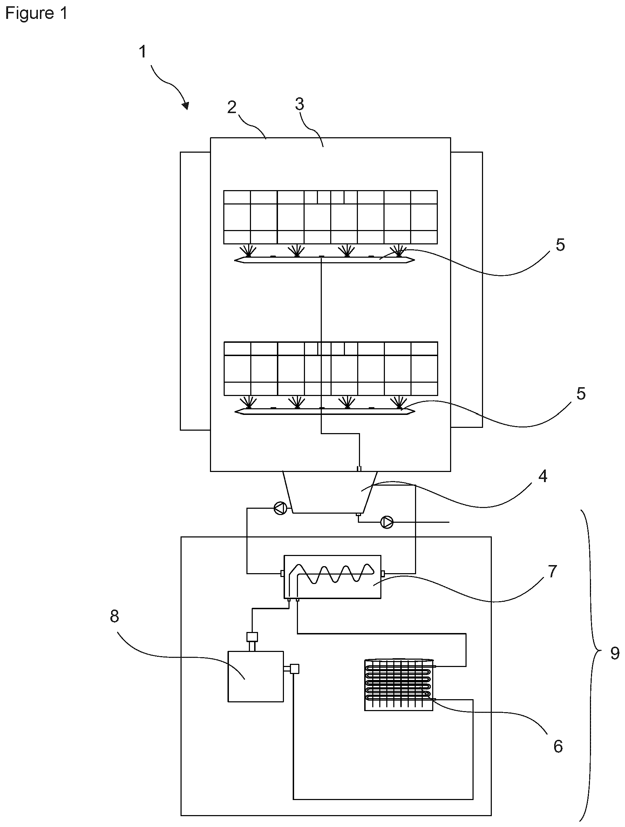

Figure 1 - is the schematic view of the dishwasher.

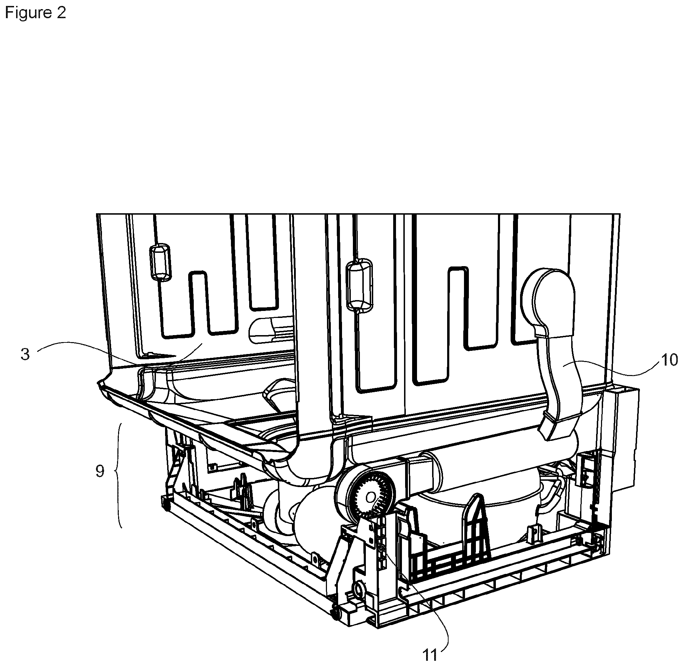

Figure 2 - is the perspective view of the heat pump and the drying duct.

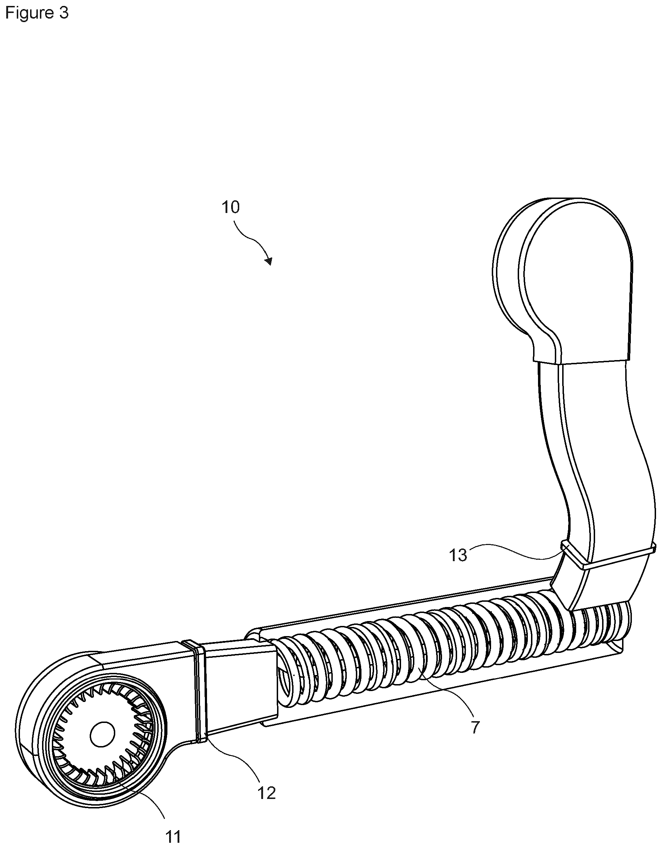

Figure 3 - is the perspective view of the drying duct and the second heat exchanger.

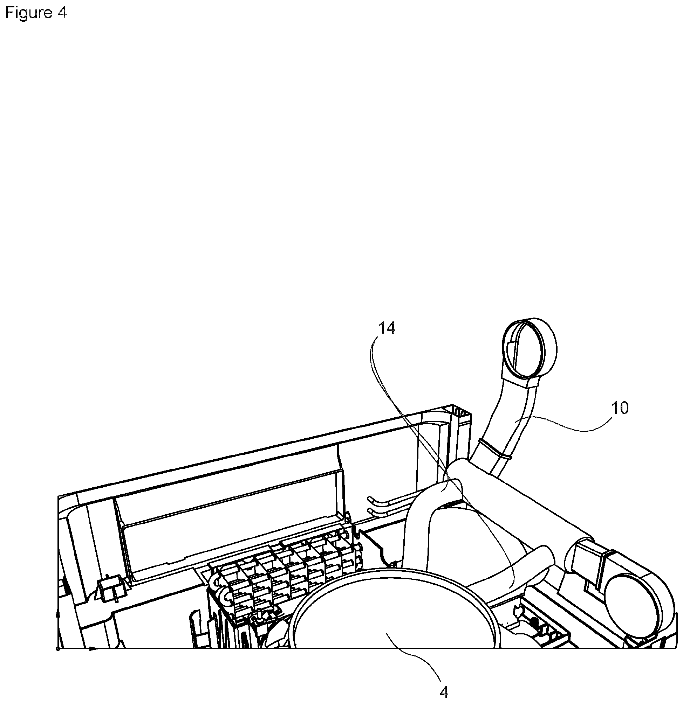

Figure 4 - is the perspective view of the drying duct and the water duct.

The elements illustrated in the figures are numbered as follows.
1- Dishwasher
2- Body
3- Washing tub
4- Sump
5- Spraying member
6- First heat exchanger
7- Second heat exchanger
8- Compressor
9- Heat pump
10-Drying duct
11-Fan
12- First shutter
13- Second shutter
14- Water duct

The dishwasher (1) comprises a body (2); a washing tub (3) which is disposed in the body (2) and wherein the washing process is performed; a sump (4) which is disposed under the washing tub (3) and wherein the water is collected; at least one spraying member (5) which sprays water onto the kitchen items placed into the washing tub (3); a heat pump (9) which is disposed under the washing tub (3) and which has a first heat exchanger (6) enabling the water to be used in the washing step to be heated by drawing heat from the environment, a second heat exchanger (7) transferring the heat received from the first heat exchanger (6) to the washing water and a compressor (8) fluidly connected to the first heat exchanger (6) and the second heat exchanger (7) so as to realize the refrigerant cycle; and a drying duct (10) with one end opening to the outer environment and the other end to the washing tub (3) and which enables the air to be delivered into the washing tub (3) during the drying step.

The dishwasher (1) of the present invention comprises the heat pump (9) wherein the second heat exchanger (7) is disposed in the drying duct (10). The second heat exchanger (7) is positioned in the drying duct (10) The washing water is enabled to be heated by means of the second heat exchanger (7) which heats up by being positioned in the drying duct (10) receiving the water during the washing step. During the washing step, the water is discharged out of the drying duct (10). When the drying step starts, the air in the drying duct (10) is enabled to be heated by means of the second heat exchanger (7). Thus, both the washing and drying performances are increased.

In an embodiment of the present invention, the dishwasher (1) comprises a fan (11) which is disposed on the end of the drying duct (10) opening to the outer environment, a first shutter (12) which is disposed between the fan (11) and the drying duct (10), and a second shutter (13) which is disposed between the drying duct (10) and the washing tub (3). By means of the fan (11, the air is sucked in from the outer environment to be taken into the drying duct (10). The air taken from the outer environment passes through the first shutter (12) and contacts the second heat exchanger (7), and the heated air passes through the second shutter (13) to be delivered into the washing tub (3). Thus, the air taken from the outside environment is enabled to be heated and used in the drying step.

In an embodiment of the present invention, the dishwasher (1) comprises at least one water duct (14) with one end arranged on the drying duct (10) and the other end opening to the sump (4) and which enables the water heated by the heat pump (9) to be delivered to the sump (4). The water duct (14) is disposed between the drying duct (10) and the sump (4). The water heated by the second heat exchanger (7) is enabled to be delivered to the sump (4) to be used in the washing step.

In an embodiment of the present invention, the dishwasher (1) comprises the first shutter (12) and the second shutter (13) which have a closed position wherein the drying duct (10) is filled with the water during the washing step such that access to the outside environment and the washing tub (3) is prevented from the drying duct (10), and an open position wherein the water in the drying duct (10) is discharged during the drying step such that the drying duct (10) is opened to the outside environment and the washing tub (3). Upon filling into the drying duct (10), the water to be used in the washing step creates a pushing effect and enables the first shutter (12) and the second shutter (13) to be closed. In this embodiment, float systems or spring systems can be used. When the shutters (12, 13) are in the open position, the air circulates as a fluid in the drying duct (10), and when the shutters (12, 13) are in the closed position, the water is in the drying duct (10) as a fluid. Thus, it is ensured that the water passes through the second heat exchanger (7) during the washing step and the air passes through the same during the drying step, increasing the washing and drying performance.

In an embodiment of the present invention, the dishwasher (1) comprises the water duct (14) which enables the hot water heated by the second heat exchanger (7) in the drying duct (10) when the first shutter (12) and the second shutter (13) are in the closed position to be delivered to the sump (4). By means of shifting the first shutter (12) and the second shutter (13) to the closed position with the effect of the water, the water is prevented from passing through the drying duct (10) to the outside environment or into the washing tub (3). When the water is discharged to be delivered to the sump (4) through the water duct (14), the water in the drying duct (10) is emptied. Thus, the water force acting on the shutters (12, 13) is removed and the shutters (12, 13) shift to the open position.

By means of the present invention, the second heat exchanger (7) is disposed in the drying duct (10) and both the water and the air are heated. Thus, a heat pump dishwasher (1) with increased washing and drying performance is realized without requiring additional cost and energy consumption.

## Claims

1. A dishwasher (1) **comprising** a body (2); a washing tub (3) which is disposed in the body (2) and wherein the washing process is performed; a sump (4) which is disposed under the washing tub (3) and wherein the water is collected; at least one spraying member (5) which sprays water onto the kitchen items placed into the washing tub (3); a heat pump (9) which is disposed under the washing tub (3) and which has a first heat exchanger (6) enabling the water to be used in the washing step to be heated by drawing heat from the environment, a second heat exchanger (7) transferring the heat received from the first heat exchanger (6) to the washing water and a compressor (8) fluidly connected to the first heat exchanger (6) and the second heat exchanger (7) so as to realize the refrigerant cycle; and a drying duct (10) with one end opening to the outer environment and the other end to the washing tub (3) and which enables the air to be delivered into the washing tub (3) during the drying step, **characterized by** the heat pump (9) wherein the second heat exchanger (7) is disposed in the drying duct (10).

2. A dishwasher (1) as in Claim 1, **characterized by** a fan (11) which is disposed on the end of the drying duct (10) opening to the outer environment, a first shutter (12) which is disposed between the fan (11) and the drying duct (10), and a second shutter (13) which is disposed between the drying duct (10) and the washing tub (3).

3. A dishwasher (1) as in Claim 1 or Claim 2, **characterized by** at least one water duct (14) with one end arranged on the drying duct (10) and the other end opening to the sump (4) and which enables the water heated by the heat pump (9) to be delivered to the sump (4).

4. A dishwasher (1) as in Claim 2 or Claim 3, **characterized by** the first shutter (12) and the second shutter (13) which have a closed position wherein the drying duct (10) is filled with the water during the washing step such that access to the outside environment and the washing tub (3) is prevented from the drying duct (10), and an open position wherein the water in the drying duct (10) is delivered to the sump (4) during the drying step such that the drying duct (10) is opened to the outside environment and the washing tub (3).

5. A dishwasher (1) as in Claim 3 or Claim 4, **characterized by** the water duct (14) which enables the hot water heated by the second heat exchanger (7) in the drying duct (10) when the first shutter (12) and the second shutter (13) are in the closed position to be delivered to the sump (4).
